# EUROPÄISCHE PATENTSCHRIFT

(11) **EP 0 744 605 B1**
(45) Veröffentlichungstag und Bekanntmachung des Hinweises auf die Patenterteilung: **12.07.2000**
(21) Anmeldenummer: 96114139.7
(22) Anmeldetag: 04.09.1996
(51) Int. Cl.: G01M 3/32

(54) **Prüfkammer**
Test chamber
Chambre d' essai

(43) Veröffentlichungstag der Anmeldung: 27.11.1996
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(56) Entgegenhaltungen:
- US-A- 3 557 607
- US-A- 4 126 034

## Beschreibung

Die vorliegende Erfindung betrifft eine Prüfkammer nach dem Oberbegriff von Anspruch 1, ein Verfahren zum Öffnen und Schliessen einer derartigen Prüfkammer sowie eine mit derartigen Prüfkammern ausgerüstete Prüfvorrichtung.

Für die Prüfung der Dichtigkeit von Behältern werden diese in Prüfkammern eingebracht und unter Beaufschlagung von Druck oder durch Erzeugung von Vakuum getestet. Wenn diese zu prüfenden Behältnisse nicht geschlossen sind, sondern offen sind wie beispielsweise Kübel oder unverschlossene Flaschen o.ä., müssen diese Öffnungen in der Prüfkammer in geeigneter Form temporär verschlossen werden. Dies kann beispielsweise direkt über den Deckel resp. das Verschlussteil der Prüfkammer erfolgen US-A-4 126 034 beschreibt eine derartige Prüfkammer. Dabei muss beispielsweise der Behälter unter Aufbringung eines entsprechend dem angewandten Prüfverfahren hohen Anpressdruckes über eine geeignete Dichtung gegen diesen Deckel gepresst werden. Dieser Anpressdruck ist insbesondere auch von der Grösse des Behälters abhängig und kann sehr gross sein.

Herkömmlicherweise ist bei zur Dichtigkeitsprüfung von derartigen Behältern bekannten Prüfkammern der Deckel wie oben beschrieben ausgestaltet. Für das Öffnen und Schliessen des Deckels, insbesondere auch des Verfahrens des Deckels in eine Belade- und Entladestation, wird eine entsprechend geeignete Bewegungsvorrichtung eingesetzt. Diese Vorrichtung übernimmt bei den herkömmlich bekannten Prüfvorrichtungen auch die Aufgabe, den Anpressdruck auf den Deckel aufzubringen. Dies bedeutet zwangsläufig, dass dieser Anpressdruck während des gesamten Prüfvorganges aufrechterhalten werden muss. Dementsprechend müssen hierfür dimensionierte Druckerzeugungsanlagen, beispielsweise hydraulisch- oder pneumatisch betrieben, vorgesehen sein. Weiter besteht bei diesen herkömmlichen Verschliess- und Anpressvorrichtungen die Gefahr, dass sich die Position des Deckels während des Prüfvorganges wenn auch nur sehr gering verschiebt oder verkantet. Dies kann aber bereits zu einer Beeinträchtigung des Messverfahrens und damit auch des Messresultates führen.

Die Aufgabe der vorliegenden Erfindung bestand darin, die obengenannten Probleme zu beheben und eine einfache und zuverlässige Möglichkeit zur Verriegelung von derartigen Prüfkammern zu ermöglichen.

Diese Aufgabe wird erfindungsgemäss durch das Kennzeichen von Anspruch 1 gelöst. Weitere erfindungsgemäss bevorzugte Ausführungsformen der Erfindung ergeben sich aus den Ansprüche 2 bis 6

Weiter wird erfindungsgemäss das Verfahren nach Anspruch 7 zum Öffnen resp. Schliessen einer erfindungsgemässen Prüfkammer vorgeschlagen. Weitere erfindungsgemässe bevorzugte Verfahrensschritte ergeben sich aus den Ansprüchen 8 bis 10.

Weiter eignen sich erfindungsgemässe Prüfkammern erfindungsgemäss für die Verwendung in Prüfvorrichtungen nach Anspruch 11.

Ein Ausführungsbeispiel der Erfindung wird nachstehend anhand von Zeichnungen noch näher erläutert. Es zeigen
Fig. 1 schematisch den Längsschnitt durch eine herkömmlichen Prüfkammer;
Fig. 2 schematisch den Längsschnitt durch den Deckel und Zuführungsbereich einer erfindungsgemäss ausgebildeten Prüfkammer;
Fig. 3 die Aufsicht und Querschnitt durch einen erfindungsgemässen Deckel nach Figur 2;
Fig. 4 schematische Längsschnitte im Bereich der Kontaktflächen des Schliessorganes und des Wandbereiches einer erfindungsgemässen Prüfkammer; und
Fig. 5 schematisch eine Karusell-Prüfanlage mit Prüfkammern.

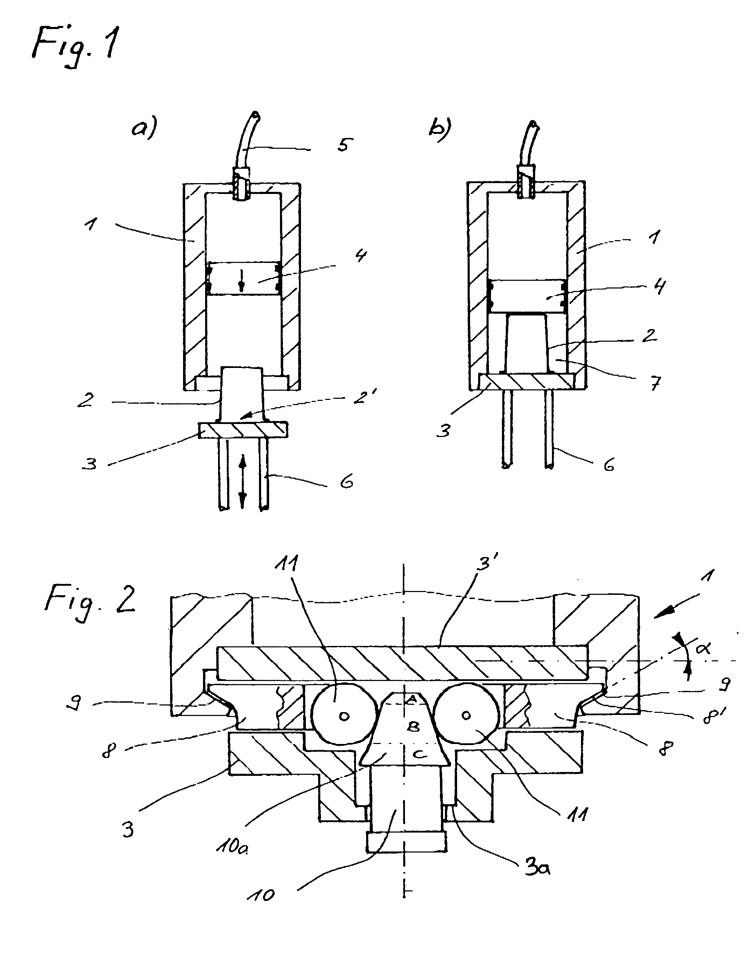

In Figur 1 a) ist schematisch der Längsschnitt durch eine herkömmliche Prüfkammer 1 für die Dichtheitsprüfung von Behältern 2 dargestellt, und zwar in geöffneten Zustand. Der Behälter 2 ist hier beispielsweise ein offener Kübel. Er wird mit der Öffnung 2' nach unten auf den Deckel 3 der Prüfkammer 1 gestellt. Dies kann entweder manuell oder vorzugsweise automatisch mittels bekannten Zuführungsvorrichtungen wie Förderbänder erfolgen. Der Deckel 3 weist vorzugsweise im Auflagebereich des Randes des Behälters 2 Dichtungsmittel, wie Dichtungsringe, auf.

Um nun den Behälter 2 in die Prüfkammer 2 einzuführen, besitzt der Deckel 3 beispielsweise ein Schliessgestänge 6, welches hydraulisch, pneumatisch oder mechanisch betätigt werden kann. Der Behälter 2 wird nun durch Verfahren des Deckels 3 in die Zuführungsöffnung 1' der Prüfkammer 1 in das Innere der Prüfkammer 1 gebracht. Um einen Haltedruck auf den Boden 2'' des Behälters 2 zu erzeugen, ist beispielsweise ein in der Prüfkammer 1 längsverfahrbarer Kolben 4 vorhanden. Dieser Kolben 4 kann ebenfalls hydraulisch, pneumatisch oder mechanisch betätigt sein. Im in der Figur 1 dargestellten Beispiel ist er pneumatisch über eine Speiseleitung 5 betätigbar.

In Figur 1b) ist die Prüfkammer 1 nun in prüfbereitem Zustand dargestellt. Der Deckel 3 wird durch das Schiebegestänge 6 in der dargestellten geschlossenen Position gehalten. Der Behälter 2 ist zwischen dem Deckel 3 und dem Kolben 4 eingeklemmt. Nun kann der eigentliche Prüfvorgang einsetzen. Dabei können die bekannten Dichteprüfverfahren eingesetzt werden, wie beispielsweise die Prüfung mittels Über- oder Unterdruck. Dabei wird ein Druckunterschied zwischen dem abgedichteten Innenraum des Behälters 2 und dem Prüfkammerraum 7 gebildet und mittels herkömmlichen Druckmessverfahren geprüft, ob der Behälter 2 eine undichte Stelle aufweist oder nicht.

Es ist klar, dass hierfür eine entsprechend diesen Prüfdrücken bemessene Kraft für das Andrücken des Behälters 2 an den Deckel 3 aufgebracht werden muss, resp. diese Kraft auch als Schliesskraft auf den Deckel 3 selbst über das Schiebegestänge aufgebracht werden muss. Dieser Schliessdruck muss während des ganzen Messvorganges aufrechterhalten werden, damit überhaupt brauchbare Messresultate erhalten werden können.

Einerseits bedeutet dies einen erheblichen Energieaufwand für das Betreiben der Prüfkammer selbst, andererseits besteht bei einer unregelmässigen oder gar unzuverlässigen Aufbringung dieser Schliesskraft die Gefahr, dass die Messung verfälscht oder gar verunmöglicht wird. Insbesondere tritt dieses Problem dann auf, wenn beispielsweise in einer kontinuierlichen Prüfanlage für die Prüfung von grossen Behältermengen möglichst kurze Prüfzeiten bei hoher Genauigkeit erreicht werden sollen. Unter hoher Genauigkeit wird dabei das Erkennen von sehr kleinen Undichtigkeiten, d.h. kleinen Löchern, verstanden.

Vielfach sind derartige Anlagen als sogenannte Karusellanlagen ausgeführt, d.h. eine Anzahl von einzelnen Prüfkammern sind auf einer umlaufenden Kreisbahn angeordnet und werden jeweils am Anfang des Umlaufes mit einem Prüfbehälter 2 beschickt und führen diesen gegen Ende eines Umlaufes wieder weg. Um das Messresultat nicht zu verfälschen, muss dabei möglichst jede Bewegung des Deckels 3 vermieden werden. Bei der dargestellten herkömmlichen Vorrichtung kann dieses Problem allerdings insbesondere bei der mechanischen Betätigung des Schiebegestänges 6 auftreten.

Diese Probleme werden nun erfindungsgemäss beispielsweise durch die in Figur 2 im Längsschnitt dargestellte Konstruktion vermieden. Hier sind nun im Deckel 3 Schliessorgane in Form von Querriegeln 8 vorgesehen. Diese Querriegel 8 weisen jeweils eine gegenüber der Oberfläche 3' des Deckels 3 in einem flachen Winkel α ausgerichtete Schliessfläche 8' auf. Diese Schliessflächen 8' liegen in geschlossenem Zustand, wie in der Figur 2 dargestellt, auf ebenso geneigten Auflageflächen 9 der Zufuhröffnungswandung des Behälter 1 auf und bewirken damit eine Keil-Verriegelung des Deckels 3. Durch die geeignete, erfindungsgemässe Wahl dieses Winkels α, welcher bevorzugterweise zwischen 10° und 30° liegt, wird eine genügende Schliesskraft erreicht, damit während des Prüfvorganges keine weitere Kraft, wie herkömmlicherweise über das Schiebegestänge 6 von Figur 1, aufgebracht werden muss. Weiter bietet diese Art von Verriegelung Gewähr, dass keine Verschiebung des Deckels 3 während des Prüfvorganges auftreten kann.

Der Deckel 3 wird bei der erfindungsgemässen Prüfkammer 1 über ein Schliessorgan, hier eine Schliessstange 10, auf- resp. abwärts bewegt. Diese Schliesstange 10 wirkt dabei auch über Rollen 11 direkt auf die Querriegel 8 ein. Der Kopf 10a der Schliessstange 10 ist vorzugsweise mehrteilig konisch ausgebildet, wie in Figur 2 durch die Sektoren A,B und C bezeichnet.

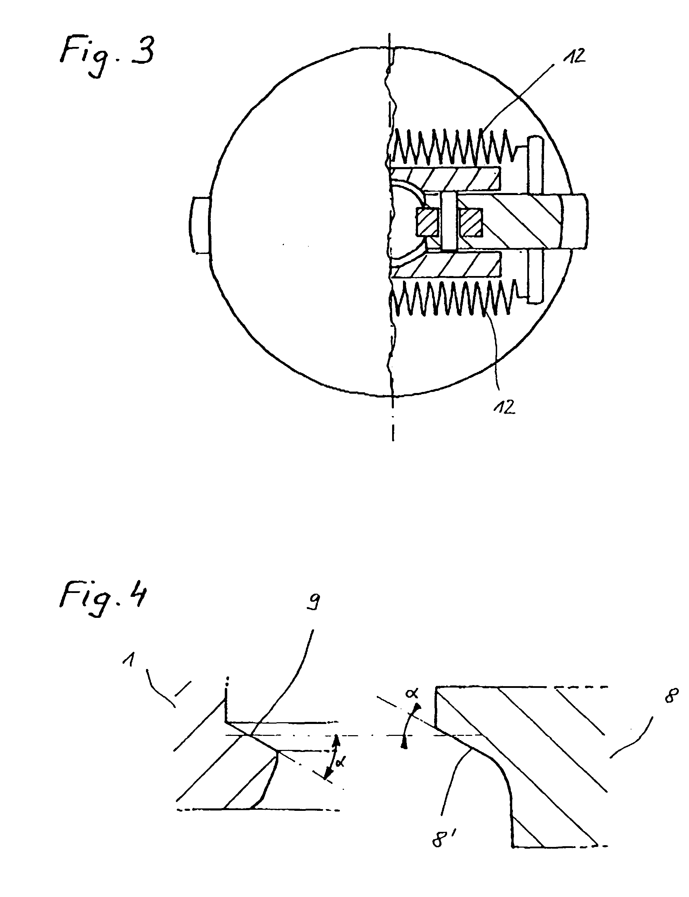

Die Spitze des Kopfes 10a (Sektor A) ist dabei sehr stark konisch ausgebildet, d.h. die Kegelfläche weist einen stumpfen Winkel auf. Wird nun in abgesenktem Zustand des Deckels 3 eine Kraft auf die Schliessstange 10 gegen die Zufuhröffnung der Prüfkammer 1 hin aufgebaut, so wird der Deckel nach oben zu dieser Zufuhröffnung hin bewegt. Dabei sind die Querriegel 8 in ihrer Öffnungsposition, d.h. gegen das Zentrum des Deckels hineingezogen, positioniert. Diese Positionierung erfolgt vorzugsweise mittels Federelementen, beispielsweise Spiralzugfedern 12, wie in Figur 3 im Aufsichts-Querschnitt dargestellt. Durch die stumpfkegelige Form des Bereiches A des Kopfes 10a bleiben die Querriegel 8 in dieser Position, da die Kraft gegen die Federelemente 12 für das Verschieben der Querriegel 8 grösser ist als die Kraft, welche für die Aufwärtsbewegung des Deckels 3 aufgewendet werden muss. Erst, wenn der Deckel 3 in die Zufuhröffnung hinein an den Anschlag gelangt, werden die Querriegel 8 nach Aussen bewegt. Um nun einen genügend hohen Schliessdruck quer zur Hubrichtung aufbringen zu können, ist der anschliessende Bereich B des Kopfes 10a nur mit einer geringen Konizität, d.h. als spitzwinklige Kegelfläche, ausgebildet. Damit wird eine hoher Kraftübertragungsfaktor geschaffen, welcher es ermöglicht, die Querriegel 8 über ihre Schliessflächen 8' auf die Auflagefläche 9 aufzuschieben, wie es in Figur 2 dargestellt ist. Anschliessend kann die auf die Schliessstange 10 aufgebrachte Schliesskraft weggelassen werden und diese beispielsweise ein kleines Stück nach unten, d.h. zurückbewegt werden. Dabei bleibt der Deckel 3, wie vorgängig bereits beschrieben, verriegelt.

Für das Messverfahren kann nun beispielsweise über einen Kolben 4 ein Schliessdruck auf den Behälter 2 aufgebracht werden, ohne dass über die Schliessstange 10 ebenfalls ein Gegendruck aufgebracht werden müsste.

Für das Entladen des Behälters 2 kann nun die dargestellte Verriegelung dadurch aufgehoben werden, dass die Schliessstange 10 nach unten bewegt wird, wobei die untere Abschlusskante des Kopfes 10a, nach dem Bereich C, an einen Absatz 3a des Deckels 3 in Anschlag gelangt und durch Aufbringen einer Zugkraft die Querriegel 8 von den Auflageflächen 9 gelöst werden und durch die Wirkung der Federelemente 12 wieder in ihre Ruhelage zurückgezogen werden.

Der vorzugsweise vorgesehene Bereich C des Kopfes 10a ist vorgesehen, die hohe Schliesskraft, welche durch den Bereich B erzeugt wird, zu begrenzen. Deshalb ist dieser Bereich wieder stumpfkegeliger ausgeführt.

Der dargestellte erfindungsgemässe Deckel 3 der Prüfkammer 1 eignet sich insbesondere dazu, mittels einer Kurvenscheibe mechanisch betätigt zu werden. Diese Kurvenscheibe kann insbesondere beispielsweise bei einer Karusell-Prüfanlage eingesetzt werden und braucht nur bei der Verschluss- und Endphase kraftwirksam mit der Schliessstange 10 in Verbindung zu stehen. Damit kann der Energieverbrauch für das Schliessen des Deckels 3 im Vergleich zur herkömmlichen Methode vorteilhafterweise stark verringert werden. Gleichzeitig wird durch die Verriegelung vorteilhafterweise der Deckel bewegungssicher in der Zufuhröffnung der Prüfkammer 1 gehalten.

Selbstverständlich kann der Antrieb der Schliessstange 10 auch mittels Hydraulik oder Pneumatik erfolgen.

In Figur 4 sind nun noch detaillierter die Ausbildung der Auflagefläche 9 und der Schliessflächen 8' im Schnitt dargestellt. Beide weisen denselben Winkel α auf. Es geht aus dieser Figur 4 auch klar hervor, dass die Schliessfläche 8' des Querriegels 8 eine entsprechend der Auflagefläche 9 geformte Kegelfläche ist, wenn der Deckel 3 eine Kreisform aufweist, wie im in den Figuren dargestellten Ausführungsbeispiel vorgestellt.

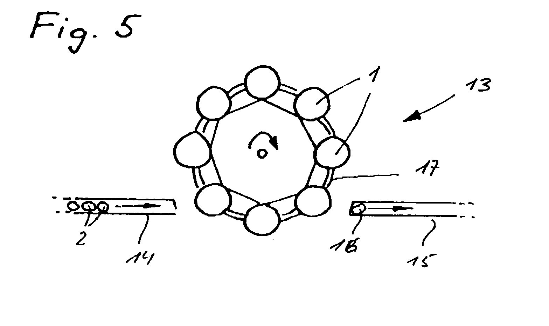

In Figur 5 ist schliesslich noch schematisch die Aufsicht auf eine Karusell-Dichtigkeitsprüfanlage 13 dargestellt. Hierbei sind eine Anzahl von Prüfkammern 1 entlang einer Kreisbahn angeordnet. Diese Anordnung wird nun um ihre Hochachse rotiert. Beispielsweise werden von der einen Seite die zu prüfenden Behälter 2 über ein Förderband 14 der Karusell-Anlage zugeführt und die fertig geprüften Behälter 16 mittels einem weiteren Förderband 15 weggeführt. Die Bewegung der Deckel 3 der Prüfkammern 1 kann nun beispielsweise über eine ebenfalls auf der Kreisbahn angeordnete Kurvenscheibe 17 erfolgen. Die Zu- und Abführung der Behälter 2 und 16 auf resp. vom Deckel 3 kann mittels herkömmlichen bekannten automatischen Vorrichtungen oder manuell erfolgen.

## Patentansprüche

1. Prüfkammer (1) für die Prüfung von offenen Hohlräumen aufweisenden Behältern (2), mit einem eine Zufuhröffnung für die Behälter (2) abdeckbaren Deckel (3), welcher gleichzeitig als Träger für den Behälter (2) ausgebildet ist, dadurch gekennzeichnet, dass der Deckel (3) in Ausnehmungen in der Prüfkammerwand eingreifbare Schliessorgane (8) aufweist, wobei die Schliessorgane (8) im Deckel (3) verschiebbar angeordnet sind und eine bezüglich der Öffnungsebene (3') in einem Winkel (α) ausgerichtete Schliessfläche (8') aufweisen, und dass in den Ausnehmungen in gleichem Winkel (α) ausgerichtete Halteflächen (9) ausgebildet sind, auf welche die Schliessflächen (8') aufschiebbar sind.

2. Prüfkammer nach Anspruch 1, dadurch gekennzeichnet, dass der Winkel (α) maximal 45° beträgt, vorzugsweise zwischen 10° und 30° liegt.

3. Prüfkammer nach Anspruch 1 oder 2, dadurch gekennzeichnet, dass für die Verschiebung der Schliessorgane (8) eine im Deckel (3) senkrecht zur Öffnungsebene (3') beweglich geführte Stange (10) im wesentlichen parallel zur Öffnungsebene (3') verschiebbar angeordnet ist, welche über ihren Kopfbereich (10a) das Schliessorgan (8) kontaktieren kann.

4. Prüfkammer nach Anspruch 3, dadurch gekennzeichnet, dass der Kopfbereich (10a) der Stange (10) mehrteilig konisch ausgebildet ist, wobei die Konizität an der Spitze (A) sehr gross, d.h. stumpfwinklig, und im nachfolgenden Bereich (B) sehr klein, d.h. spitzwinklig, ist und vorzugsweise einen daran anschliessenden weiteren Bereich (D) mit erneut grosser Konizität aufweist.

5. Prüfkammer nach Anspruch 3 oder 4, dadurch gekennzeichnet, dass die Schliessorgane (8) an dem mit der Stange (10) kontaktierbaren Bereich drehbar gelagerte Rollen (11) aufweisen.

6. Prüfkammer nach einem der Ansprüche 1 bis 5, dadurch gekennzeichnet, dass im Deckel (3) zwischen den Schliessorganen (8) und dem Deckel (3) Rückholelemente (12), vorzugsweise Federelemente, vorhanden sind, welche entgegen der Verschlussrichtung der Schliessorgane (8) wirkend angeordnet sind.

7. Verfahren zum Schliessen oder Öffnen des Deckels (3) einer Prüfkammer (1) nach einem der Ansprüche 1 bis 6, dadurch gekennzeichnet, dass zum Schliessen
- der Deckel (3) in die Zuführöffnung eingesetzt wird,
- danach die Schliessorgane (8) in die Ausnehmungen der Zuführöffnung unter Beaufschlagung eines Schliessdrucks eingeschoben werden, und
- danach der Schliessdruck reduziert resp. aufgehoben wird,
oder dass zum Öffnen
- der Deckel (3) entgegen der Schliessrichtung unter Aufbringung einer Zugkraft auf den Deckel (3) aus der Zuführöffnung herausgezogen wird.

8. Verfahren nach Anspruch 7, dadurch gekennzeichnet, dass der Schliessdruck und/oder die Zugkraft hydraulisch, pneumatisch oder mechanisch aufgebracht wird.

9. Verfahren nach Anspruch 7 oder 8, dass der Schliessdruck mittels einer über eine Kurvenscheibe bewegten Stange (10), welche über einen vorzugsweise mehrfach konisch ausgebildeten Kopfbereich (10a) auf die Schliessorgane (8) einwirkt, aufgebracht wird.

10. Verfahren nach Anspruch 7 oder 8, dass die Zugkraft mittels einer über eine Kurvenscheibe bewegten Stange (10) auf den Deckel (3) übertragen wird.

11. Prüfvorrichtung mit auf einer umlaufenden Bahn drehbar angeordneten Prüfkammern (1) nach einem der Ansprüche 1 bis 7.

## Claims

1. A test chamber (1) for testing containers (2) having open cavities, with a cover (3) which can cover a supply opening for the containers (2), which cover is designed at the same time as a support for the container (2), characterised in that the cover (3) has closing elements (8) which can engage in recesses in the test chamber wall, the closing elements (8) being arranged displaceably in the lid (3) and having a closing surface (8') oriented at an angle (α) to the opening plane (3'), and that holding surfaces (9) oriented at the same angle (α) are formed in the recesses, on to which holding surfaces the closing surfaces (8') can be pushed.

2. A test chamber according to Claim 1, characterised in that the angle (α) is at most 45°, preferably is between 10° and 30°.

3. A test chamber according to Claim 1 or 2, characterised in that a rod (10) movably guided in the cover (3) at right-angles to the opening plane (3') is arranged displaceably substantially parallel to the opening plane (3') for displacing the closing elements (8), which rod can contact the closing element (8) via its head region (10a).

4. A test chamber according to Claim 3, characterised in that the head region (10a) of the rod (10) is designed conically in several parts, the conicity at the tip (A) being very great, i.e. obtuse-angled, and in the following region (B) very small, i.e. acute-angled, and preferably has a further region (D) adjoining this which again has great conicity.

5. A test chamber according to Claim 3 or 4, characterised in that the closing elements (8) have rotatably mounted rollers (11) on the region which can be contacted with the rod (10).

6. A test chamber according to one of Claims 1 to 5, characterised in that restoring elements (12), preferably spring elements (12), are present in the cover (3) between the closing elements (8) and the cover (3), which restoring elements are arranged to act counter to the direction of closure of the closing elements (8).

7. A method for closing or opening the cover (3) of a test chamber (1) according to one of Claims 1 to 6, characterised in that, for closing,
- the cover (3) is inserted into the supply opening,
- then the closing elements (8) are inserted into the recesses in the supply opening, applying a closing pressure, and
- then the closing pressure is reduced or removed,
or that, for opening,
- the cover (3) is removed from the supply opening, counter to the direction of closure, by applying a tensile force to the cover (3).

8. A method according to Claim 7, characterised in that the closing pressure and/or the tensile force is applied hydraulically, pneumatically or mechanically.

9. A method according to Claim 7 or 8, [characterised in that] the closing pressure is applied by means of a rod (10) moved by means of a cam plate, which rod acts on the closing elements (8) via a preferably multiply conical head region (10a).

10. A method according to Claim 7 or 8, [characterised in that] the tensile force is transferred to the cover (3) by means of a rod (10) which is moved by means of a cam plate.

11. A testing device with test chambers (1) arranged rotatably on a rotating track in accordance with one of Claims 1 to 7.

## Revendications

1. Chambre de contrôle (1) pour le contrôle de récipients (2) présentant des cavités ouvertes, comportant un couvercle (3) qui est apte à couvrir une ouverture d'amenée pour les récipients (2) et qui est en même temps conçu comme un support pour les récipients (2), caractérisée en ce que le couvercle (3) comporte des organes de fermeture (8) aptes à pénétrer dans des creux de la paroi de chambre de contrôle, lesquels organes de fermeture (8) sont disposés dans le couvercle de manière à pouvoir être déplacés et présentent une surface de fermeture (8') orientée suivant un angle (α) par rapport au plan d'ouverture (3'), et en ce qu'il est prévu, dans les creux, des surfaces de retenue (9) orientées suivant le même angle (α), sur lesquelles les surfaces de fermeture (8') peuvent glisser.

2. Chambre de contrôle selon la revendication 1, caractérisée en ce que l'angle (α) est de 45° au maximum et est situé de préférence entre 10° et 30°.

3. Chambre de contrôle selon la revendication 1 ou 2, caractérisée en ce que pour le déplacement des organes de fermeture (8), une tige (10) mobile dans le couvercle (3) perpendiculairement au plan d'ouverture (3') est disposée de manière à permettre un déplacement globalement parallèle au plan d'ouverture (3') et peut venir en contact avec l'organe de fermeture (8) grâce à sa zone de tête (10a).

4. Chambre de contrôle selon la revendication 3, caractérisée en ce que la zone de tête (10a) de la tige (10) présente une forme conique en plusieurs parties, sa conicité étant très grande à la pointe (A), c'est-à-dire qu'elle présente un angle obtus, puis très faible dans la zone suivante (B), c'est-à-dire qu'elle présente un angle aigu, tandis qu'une autre zone (C) faisant suite à la deuxième présente à nouveau une grande conicité.

5. Chambre de contrôle selon la revendication 3 ou 4, caractérisée en ce que les organes de fermeture (8) comportent, au niveau de la zone apte à venir en contact avec la tige (10), des rouleaux (11) qui sont montés en rotation.

6. Chambre de contrôle selon l'une des revendications 1 à 5, caractérisée en ce qu'il est prévu dans le couvercle (3), entre les organes de fermeture (8) et le couvercle (3), des éléments de rappel (12), de préférence des éléments formant ressorts, qui sont disposés de manière à agir à l'encontre du sens de fermeture des organes de fermeture (8).

7. Procédé pour fermer ou ouvrir le couvercle (3) d'une chambre de contrôle (1) selon l'une des revendications 1 à 6, caractérisé en ce que pour la fermeture,
- le couvercle (3) est placé dans l'ouverture d'amenée,
- puis les organes de fermeture (8) sont poussés dans les creux de l'ouverture d'amenée en étant contraints par une pression de fermeture, et
- la pression de fermeture est ensuite réduite ou supprimée,
ou en ce que pour l'ouverture,
- le couvercle (3) est extrait de l'ouverture d'amenée à l'encontre du sens de fermeture grâce à une force de traction exercée sur lui.

8. Procédé selon la revendication 7, caractérisé en ce que la pression de fermeture et/ou la force de traction est appliquée par voie hydraulique, pneumatique ou mécanique.

9. Procédé selon la revendication 7 ou 8, caractérisé en ce que la pression de fermeture est appliquée grâce à une tige (10), déplacée par l'intermédiaire d'un disque à came, qui agit sur les organes de fermeture (8) par l'intermédiaire d'une zone de tête (10a) qui présente de préférence une forme conique en plusieurs parties.

10. Procédé selon la revendication 7 ou 8, caractérisé en ce que la force de traction est transmise au couvercle (3) à l'aide d'une tige (10) déplacée par l'intermédiaire d'un disque à came.

11. Dispositif de contrôle comportant des chambres de contrôle (1) selon l'une des revendications 1 à 7 qui sont disposées pour pouvoir tourner sur une trajectoire circulaire.
